# EUROPEAN PATENT APPLICATION

(11) **EP 3 958 096 A1**
(43) Date of publication of application: **23.02.2022**
(21) Application number: 20192067.5
(22) Date of filing: 21.08.2020
(51) Int. Cl.: G06F 3/01, G06F 8/00

(54) **A METHOD AND SYSTEM TO INTEGRATE MULTIPLE VIRTUAL REALITY/AUGMENTED REALITY GLASS HEADSETS AND ACCESSORY DEVICES**

(71) Applicant: Deutsche Telekom AG, 53113 Bonn (DE)
(72) Inventor: YUN, Harrison Hongseo, 12203 Berlin (DE); HELMUT, Vivien, 12309 Berlin (DE); BUCHHOLZ, Thomas, 10317 Berlin (DE)
(74) Representative: Vossius & Partner Patentanwälte Rechtsanwälte mbB

(57) **Abstract**

The present invention relates a mobile computer-tethered VR/AR system in which various head mount displays, HMDs, and VR/AR controllers having different device form factors can be compatibly used with the mobile computer. This mobile computer-tethered VR/AR system is based on a mobile computer comprising a processor; and a memory comprising program codes stored therein, the program codes corresponding to: a plurality of software development kits, SDKs, each configured to interface with an HMD having a particular device form factor; a local VR/AR application configured to generate VR/AR images to be displayed on a HMD for a VR/AR service; and an abstraction layer configured to interface between the SDKs and the local VR/AR application, and convert device-independent data or requests of functions received from the local VR/AR application into device-dependent data or requests of functions for the SDKs, and vice versa.

## Description

The present invention relates to a virtual reality (VR) or augmented reality (AR) system and a method of operating said system.

A VR system enables users to experience an artificial environment that is created with software in such a way that users accept the artificial environment as a real environment. An AR system provides users with an interactive experience of a real-world environment where the objects that reside in the real world are enhanced by computer-generated perceptual information. This VR and AR system can be selectively implemented by one single system.

In the following description, claims and drawings, for simplicity, the term "VR/AR" refers to "virtual reality or augmented reality".

A VR/AR system is generally based on a glass headset, i.e. a head-mounted display (HMD). The HMD basically comprises a display which may be separately attached or installed as one body with the HMD itself. For a VR system, users can immerse themselves in a virtual 3D space by putting the HMD on the head and view the virtual 3D space in the display, rendering of which changes dynamically at least in response to user's head position and movement.

The HMDs may be categorized into three different types, i.e. mobile, tethered and stand-alone. Mobile-type HMDs provide shells with lenses into which a smartphone can be inserted. Tethered HMDs are connected to stationary computers or mobile computers, including smartphones, and provided with VR/AR images and sound data from the connected computers. Stand-alone HMDs include processors and storage memory therein required for executing a VR/AR application and generating VR/AR images for rendering.

Mobile-type and tethered-type VR/AR HMDs may be connected to one or more VR/AR servers in the cloud environment. Generating VR/AR 3D images may be partially or entirely performed by such VR/AR servers and the connected VR/AR HMD may merely display images transmitted from the VR/AR servers. These VR/AR systems may be defined as cloud-rendering VR/AR systems.

Recently as the processing speed of mobile computers dramatically improves, mobile computer-tethered VR/AR HMDs have been attracting attentions of the market. Mobile computer-tethered VR/AR HMDs provides better mobility than stationary computer-tethered VR/AR HMDs along with providing as much high-quality VR/AR images as the stationary computer-tethered VR/AR HMDs do. Further, VR/AR systems based on mobile computer-tethered VR/AR HMDs can be implemented relatively at a low price because user's mobile computers can be used for the VR/AR systems.

There are serval manufacturers developing VR/AR glass HMDs which can be tethered with mobile computers. They are in highly competition against others by deploying their own ecosystem comprising VR/AR glass HMD hardware having their unique form factor, and VR/AR software dedicated to the VR/AR glass HMD hardware. In other words, current VR/AR market ecosystem has been fragmented.

In this environment, each VR/AR application must support and deal with each different fragmented API sets, i.e. software development kits (SDKs), provided by various VR/AR manufacturers. This problem also spoils backward-compatibility of on-going VR/AR application ecosystem whenever a new VR/AR hardware, including VR/AR glass HMD and VR/AR accessory devices, is released. In worst case, any new VR/AR hardware have to start from scratch to provide VR/AR applications and service in a market. Further, an individual VR/AR application developer is supposed to manage and release multiple VR/AR application software, and users who want to use a particular VR/AR application software may have to purchase an additional VR/AR HMD dedicated to that particular VR/AR application software because their already-own VR/AR HMD is not compatible with the particular VR/AR application.

The invention defined in the appended claims resolves the above-identified problem.

The invention provides a mobile computer-tethered VR/AR system extending and integrating with multiple VR/AR HMDs and VR/AR accessory devices, and a mobile computer for this VR/AR system.

The invention provides a mobile computer-tethered VR/AR system in which any VR/AR HMDs and VR/AR accessory devices produced by different manufactures can be used compatibly with a mobile computer, and a mobile computer for this VR/AR system.

The invention thus provides not only a cross platform solution to get rid of dependency on VR/AR device manufacturers, but also scalability to extend VR/AR service profile.

In the following description, there is provided a mobile computer connectable with a plurality of head mount displays, HMDs, which have different device form factors. In the present description and claims, the term "form factor" means a hardware design aspect that defines and prescribes a size, shape, and/or other physical specifications of device.

The mobile computer comprises: a processor; and a memory comprising program codes stored therein, the program codes corresponding to: a plurality of software development kits, SDKs, each configured to interface with an HMD having a particular device form factor; a local VR/AR application configured to generate VR/AR images to be displayed on a HMD for a VR/AR service; and an abstraction layer configured to interface between the SDKs and the local VR/AR application, and convert device-independent data or requests of functions received from the local VR/AR application into device-dependent data or requests of functions for the SDKs, and vice versa.

Preferably, the mobile computer may comprise a VR/AR device profile management module, a tracking abstraction module and a display abstraction module in the abstraction layer. When the mobile computer is connected to a HMD having a display and at least one sensor, the VR/AR device profile management module may obtain a device profile of the HMD or information related to the device profile, and forward the device profile or the information to the local VR/AR application. The tracking abstraction module may obtain parameters of the at least one sensor corresponding to user inputs to the at least one sensor, and forward the obtained parameters or information related to the obtained parameters to the local VR/AR application. The display abstraction module may receive VR/AR images generated by the local VR/AR application and manage parameters of the display in the HMD for displaying the VR/AR images.

Preferably, the local VR/AR application may generate the VR/AR images based on the device profile or the information received from the VR/AR device profile management module, and the parameters or the information received from the track abstraction module.

Preferably, the VR/AR device profile management module may forward the device profile or the information related to the device profile to the display abstraction module, and the display abstraction module may manage the parameters of the display in the HMD based on the device profile or the information forwarded from the VR/AR device profile management module.

Preferably, the mobile computer may be connected to a VR/AR accessory which comprises at least one sensor to detect user inputs of a particular type. The mobile computer may comprise a controller abstraction module in the abstraction layer configured to obtain parameters of the VR/AR accessory corresponding to the user inputs to the VR/AR accessory, and forward the obtained parameters or information related to the obtained parameters to the local VR/AR application.

Preferably, the mobile computer may be connected with a remote VR/AR server or stationary computer executing a remote VR/AR application. The remote VR/AR application cooperates with the local VR/AR application to provide the VR/AR service. The abstraction layer may interface between the SDKs and the remote VR/AR application, and convert device-independent data or requests of functions received from the remote VR/AR application into device-dependent data or requests of functions for the SDKs, and vice versa.

In the following description, there is also provided a method of providing a VR/AR system comprising a mobile computer as a computing device to generate VR/AR images; and a HMD comprising a display and at least one sensor and being connected to the mobile computer. The mobile computer comprises a processor; and a memory comprising program codes stored therein. The method comprising: providing a plurality of software development kits, SDK in the mobile computer, each SDK configured to interface with an HMD having a particular device form factor; identifying one of the SDKs dedicated to the connected HMD; providing a local VR/AR application in the mobile computer configured to generate VR/AR images for display on the connected HMD; and providing an abstraction layer in the mobile computer, the abstraction layer configured to interface between the identified SDK and the local VR/AR application, and convert device-independent data or requests of functions received from the local VR/AR application into device-dependent data or requests of functions for the identified SDK, and vice versa.

Preferably, the method may further comprise: providing a VR/AR device profile management module in the abstraction layer configured to obtain a device profile of the HMD or information related to the device profile, and forward the device profile or the information to the local VR/AR application; providing a tracking abstraction module in the abstraction layer configured to obtain parameters of the at least one sensor in the HMD corresponding to user inputs to the at least one sensor, and forward the obtained parameters or information related to the obtained parameters to the local VR/AR application; and providing a display abstraction module in the abstraction layer configured to receive VR/AR images generated by the local VR/AR application and manage parameters of the display in the HMD for displaying the VR/AR images.

Preferably, the local VR/AR application may be further configured to generate the VR/AR images based on the device profile or the information received from the VR/AR device profile management module, and the parameters or the information received from the track abstraction module.

Preferably, the VR/AR device profile management module may be further configured to forward the device profile or the information related to the device profile to the display abstraction module. The display abstraction module may be further configured to manage the parameters of the display in the HMD based on the device profile or the information forwarded from the VR/AR device profile management module.

Preferably, when the mobile computer is connected to a VR/AR accessory which comprises at least one sensor to detect user inputs of a particular type, the method may further comprise providing a controller abstraction module in the abstraction layer to obtain parameters of the VR/AR accessory corresponding to the user inputs to the VR/AR accessory, and forward the obtained parameters or information related to the obtained parameters to the local VR/AR application.

Preferably, the controller abstraction module may be configured to obtain parameters of the VR/AR accessory corresponding to user inputs to the VR/AR accessory, and forward the obtained parameters or information related to the obtained parameters to the local VR/AR application.

Preferably, the VR/AR system may further comprise a remote VR/AR server or stationary computer executing a remote VR/AR application, the remote VR/AR application cooperating with the local VR/AR application for the VR/AR service. Then, the abstraction layer may be further configured to interface between the SDKs and the remote VR/AR application, and convert Device-independent data or requests of functions received from the remote VR/AR application into Device-dependent data or requests of functions for the SDKs, and vice versa.

In the following description, there is provided a VR/AR system for providing a VR/AR service. The system comprises the mobile computer mentioned above to generate VR/AR images for the VR/AR service; and a HMD connected to the mobile computer and having a display and at least one sensor. The HMD is configured to interface with a SDK dedicated to the HMD to display the VR/AR images on the display and receive user inputs to the at least one sensor. The VR/AR system may further comprise a VR/AR controller configured to interface with said SDK to receive user inputs to one or more sensors in the VR/AR controller.

The accompanying drawings, which are included to provide a further understanding of the present invention and constitute a portion of the specification, illustrate embodiments of the present invention, and together with the description serve to explain the principle of the present invention.
Fig. 1 shows a high level architecture of a mobile computer-tethered VR/AR system according to the invention.
Fig. 2 illustrates sub-modules of a VR/AR device profile management module in the abstraction layer, and data flows between the VR/AR device profile management module and other software components.
Fig. 3 illustrates sub-modules of a tracking abstraction module in the abstraction layer, and data flows between the VR/AR device profile management module and other software components.
Fig. 4 illustrates sub-modules of a controller abstraction module in the abstraction layer, and data flows between the VR/AR device profile management module and other software components.
Fig. 5 illustrates sub-modules of a display abstraction module in the abstraction layer, and data flows between the VR/AR device profile management module and other software components.
Fig. 6 illustrate a flow of operation performed by the abstraction layer when a new HMD is connected to the mobile computer.

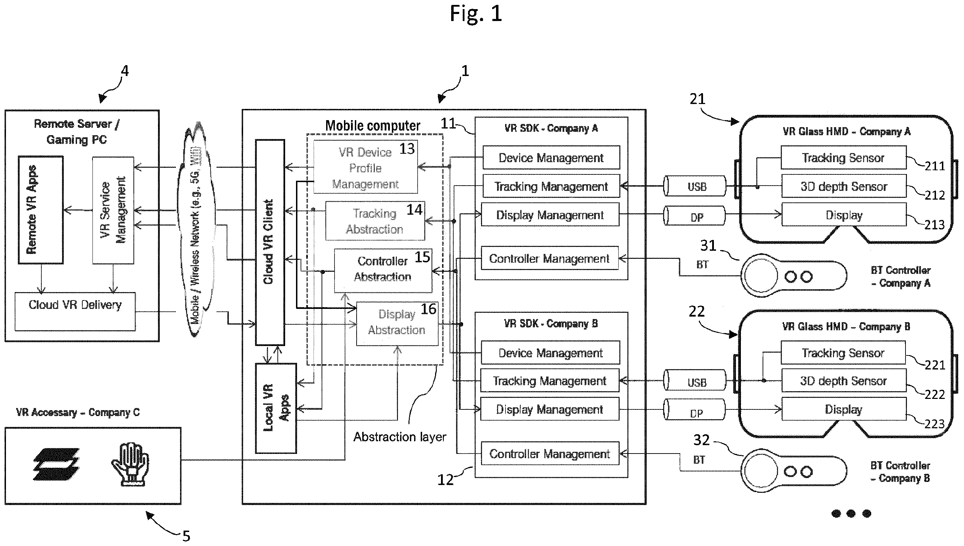

According to Fig. 1, a mobile computer-tethered VR/AR system basically comprises a mobile computer 1 and multiple HMDs, i.e. a first HMD 21 and a second HMD 22, which are operatively compatible with the mobile computer 1. The VR/AR system may further comprise one or more remote VR/AR servers or stationary computer 4 communicating with the mobile computer 1. The VR/AR system may further comprise multiple VR/AR controllers, i.e. a first VR/AR controller 31 and a second VR/AR controller 32, which are also operatively compatible with the mobile computer 1. The first and second VR/AR controllers 31, 32 may be produced by different manufacturers producing the respective first and second HMDs 21, 22. The VR/AR system may further comprise one or more VR/AR accessories 5 which are also operatively compatible with the mobile computer 1.

Each of the first and second HMDs 21, 22 comprises one or more tracking sensors 211, 221, one or more 3D depth sensors 212, 222 and a display 213, 223.

The tracking sensor 211, 221 tracks a motion of the user's head. The tracking sensor 211, 221 may be a gyroscope or accelerometer, but is not limited to that. The tracking sensor 211, 221 may be 3 or 6 degree-of-freedom tracking sensors. The term "6 degrees of freedom" refers to movement in three-dimensional space including changes in position along three perpendicular axes and in orientation through rotation about the three perpendicular axes.

The tracking sensor 211, 221 provides sensor readings or its parameters to the mobile computer 1 for use in image or video rendering. The HMD 21, 22 further comprises one or more communication modules (not shown) to transmit the sensor readings or parameters to the mobile computer 1. The sensor readings may include, but are not limited to, coordinates relating to various positions of the user's head during VR/AR activities. The sensor readings are used by a VR/AR application running on the mobile computer 1 and/or the remote VR/AR server 4.

The 3D depth sensor 212, 222 tracks a position of the user. The 3D depth sensor 212, 222 may be a camera, but is not limited to that. As users moves their head, changes in positions of the user's head over time are tracked by the 3D depth sensor 212, 222 and used to determine positions of the HMD 21, 22 in accordance with actual physical head motions made by the user. The 3D depth sensor 212, 222 also provides sensor readings or its parameters to the mobile computer 1 for use in rendering via one or more communication modules.

The display 213, 223 presents VR/AR images generated by the mobile computer 1 and/or the remote VR/AR server 4. Specifically, when user shifts their head in some direction and/or tilts their head at an angle, new sensor readings from the tracking sensor 211, 221 and the 3D depth sensor are obtained and transmitted to the mobile computer 1. After VR/AR images have been newly rendered by the mobile computer 1 and/or the remote VR/AR server 4 based on the new sensor readings, the new VR/AR images are transmitted to the HMD 21, 22. The HMD 21, 22 presents on the display 213, 223 a view corresponding to the shifting and/or titling movement of the user's head. The communication module (not shown) in the HMD 21, 22 is also configured to receive the 3D virtual images from the mobile computer 1.

The VR/AR controller 31, 32 receives user inputs through one or more input means in it. The input means may be a gyroscope, a button and/or a touch screen but is not limited to that. The user inputs received from the VR/AR controller 31, 32 are transmitted to the mobile computer 1, and used for generating 3D virtual images by the VR/AR application running on the mobile computer 1 and/or the remote VR/AR server 4. Therefore, in case where user moves their head along with generating a user input via the VR/AR controller 31, 32, the VR/AR images presented on the display 213, 223 are updated to reflect the movement of the head as well as an outcome in response to the user input to the VR/AR controller 31, 32.

The VR/AR accessory 5 is an input device having a shape optimized for a particular type of user inputs. The VR/AR accessory 5 is generally used for the purpose of providing more immersive VR/AR experience. The VR/AR accessory 5 may have a shape of gloves or a steering wheel but is not limited to that. The VR/AR accessory 5 may receive user inputs for a particular VR/AR application or a particular HMD. The VR/AR accessory 5 may be purchased together with the particular VR/AR application or the particular HMD.

The VR/AR accessory 5 comprises one or more sensors (not shown) to detect user's inputs. The sensors may be a pressure sensor or a gyroscope but is not limited to that. The VR/AR accessory 5 further comprises one or more communication module to transmit sensor readings to the mobile computer 1. User inputs received from the VR/AR accessory 5 are transmitted to the mobile computer 1, and may be used together with the sensor readings from the tracking sensor 211, 221, the 3D depth sensor 212, 222, and/or the controller 31, 32 for rendering of VR/AR images by the VR/AR application.

The mobile computer 1 comprises at least a processor (not shown) and a memory (not shown) storing program codes therein. According to the present invention, the mobile computer 1 has a software architecture which enable any HMDs 21, 22, controllers 31, 32 and/or VR/AR accessories to be operatively compatible with the mobile computer 1 and thus used in implementing a mobile computer-tethered VR/AR system.

The software architecture comprises multiple VR/AR software development kits, VR/AR SDKs, i.e. a first VR/AR SDK 11 and a second VR/AR SDK 12. Each of the VR/AR SDKs provides fundamental tools to design and build VR/AR experiences with a particular HMD The VR/AR SDKs take the form of application programming interfaces, APIs.

Each of SDKs 11, 12 comprise multiple modules for device profile management, tracking management and display management, preferably further for controller management. The device profile management module performs at least the function of obtaining a device profile of a HMD currently connected to the mobile computer 1. The device profile may comprise an identifier indicating a manufacturer of the HMD and/or a VR/AR hardware platform related to the HMD but not limited to that. The tracking management module performs at least the function of obtaining position and/or movement data of the user's head based on the sensor readings or parameters of the tracking sensor 212, 222 and/or the 3D depth sensor 213, 223. The display management module performs at least the function of adapting VR/AR images and/or video data received for display on the HMD 21, 22. The controller management module performs at least the function of obtaining user input data based on the sensor readings or parameters of the VR/AR controller 31, 32.

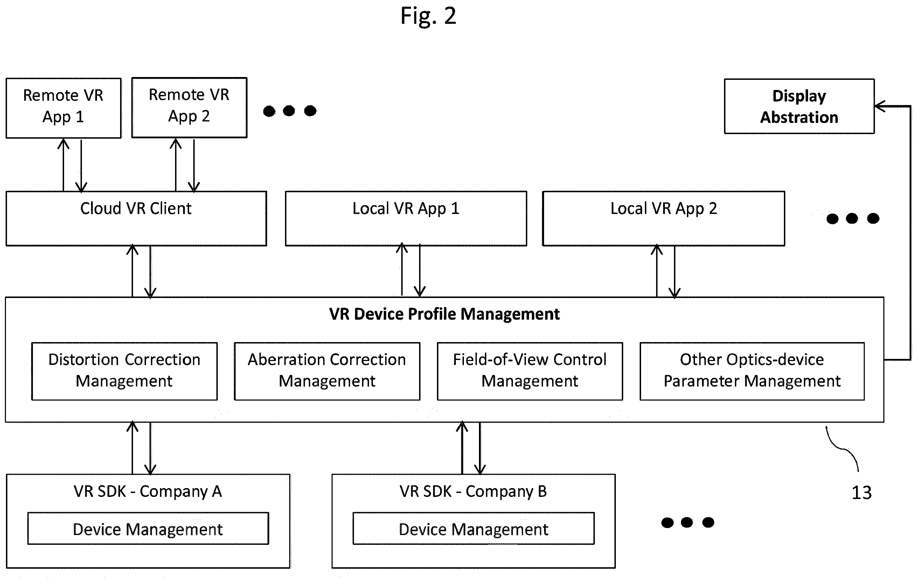

In the VR/AR system, the mobile computer 1 comprises a plurality of local VR/AR applications, e.g. a first local VR/AR application and a second local VR/AR application as shown in Figs. 2 to 5. Each local VR/AR application may provide a different VR/AR service.

As mentioned above, the VR/AR system in the invention may further comprise the remote VR/AR server or stationary computer 4. The remote VR/AR server 4 communicates with the mobile computer 1 wirelessly in any communication protocol, not limited to 5G or Wifi.

The remote VR/AR server 4 may be any server accessible by the mobile computer 1 in a cloud computing environment, not a dedicated or physical server.

The remote VR/AR server 4 comprises a plurality of remote VR/AR applications, each of which may cooperate with a corresponding local VR/AR application to provide a VR/AR service. Thus, the remote VR/AR application performs functions similar to or same as the functions performed by the corresponding local VR/AR application.

Processing assigned to a local VR/AR application may be partially or entirely taken over by a remote VR/AR application.

In case where the remote VR/AR server 4 is not available, total processing for a VR/AR service may be performed by the local VR/AR application. Alternatively, in case where the mobile computer 1 identifies availability of the remote VR/AR server 4, total processing for a VR/AR service may be distributed between the mobile computer 1 and the remote VR/AR server 4 and separately performed by the respectively local and remote VR/AR applications. Then, the results of the processing are collected and manipulated to be adapted for display on the HMD 2. This collection and manipulation may be performed by the local VR/AR application.

When part of the processing for the VR/AR service is distributed to the remote VR/AR server 4, data related to sensor readings from one of the tracking sensor 211, 221, the 3D depth sensor 212, 222, the input means in the controller 31, 32 and/or the VR/AR accessory device 5 may be transmitted to the remote VR/AR server 4 from the mobile computer 1 and used by the remote VR/AR application for the distributed processing.

A ratio of dividing the total processing between the local VR/AR application 12 and the remote VR/AR application 13 may be changed dynamically depending on a data transceiving speed between the mobile computer 1 and the remote VR/AR server 3. For instance, as the data transceving speed is higher, more processing is performed by the remote VR/AR application. Alternatively, the ratio may be adjusted based on processing capability of the mobile computer 1, such as hardware capability. For instance, if the mobile computer 1 has lower processing capability than a preset level, more processing for the VR/AR service may be performed by the remote VR/AR application. Alternatively, the ratio may be adjusted based on the difference in processing capability between the mobile computer 1 and the remote VR/AR server 4. For instance, as such difference is higher, more processing may be performed by the remote VR/AR application.

The mobile computer 1 may further comprise a cloud VR/AR client to transmit data necessary for processing by the remote VR/AR application 3 to the remote VR/AR server 4, and receive results of the processing from the remote VR/AR server 4. The cloud VR/AR client may be stored in the memory (not shown) of the mobile computer 1.

The remote VR/AR server 4 may further comprise a VR/AR service management for receiving the data transmitted from the could VR/AR client. The VR/AR service management may further adjust priorities of different processing. The remote VR/AR server 4 may further comprises a cloud VR/AR delivery for delivering results of the processing by the remote VR/AR application 31 to the cloud VR/AR client.

According to the present invention, the software architecture in the mobile computer 1 comprises an abstraction layer interfacing between the platform-dependent VR/AR SDKs and the local or remote VR/AR applications. The abstraction layer provides various utilities, data structures, and/or resources for the local or remote applications to provide VR/AR images to and receive user inputs from the VR/AR SDKs. Further, the abstraction layer works for converting data and/or requests of functions originating from the local or remote VR/AR applications into data and/or requests of functions suitable for the device platform-dependent VR/AR SDKs, and vice versa. Thus, the abstraction layer includes device platform dependent functionality and device platform independent functionality.

As illustrated in Fig. 1, the abstraction layer may include a VR/AR device profile management module 13, a tracking abstraction module 14, a controller abstraction module 15 and a display abstraction module 16.

The VR/AR device profile management module 13 interfaces between the VR/AR applications and the VR/AR SDKs to obtain a device profile of the HMD 21, 22 connected to the mobile computer 1 and manage optical parameters of the HMD 21, 22. Depending on specific functions, the VR/AR device profile management module 13 may comprise sub-modules for managing distortion correction, aberration correction, field-of-view control and/or other optical parameters of the HMD 21, 22, as illustrated in Fig. 2.

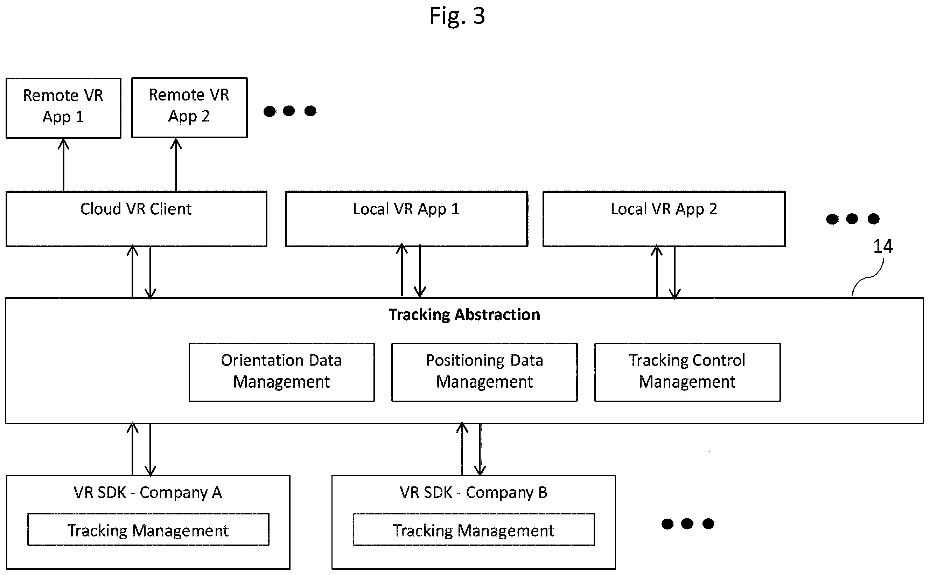

The tracking abstraction module 14 interfaces between the VR/AR applications and the VR/AR SDKs to obtain and manage parameters of the tracking sensor 211, 221 and/or the 3D depth sensor 212, 222 in the HMD 21, 22. Depending on specific functions, the tracking abstraction module 14 comprises sub-modules for managing orientation data, positioning data and/or tracking control as illustrated in Fig. 3.

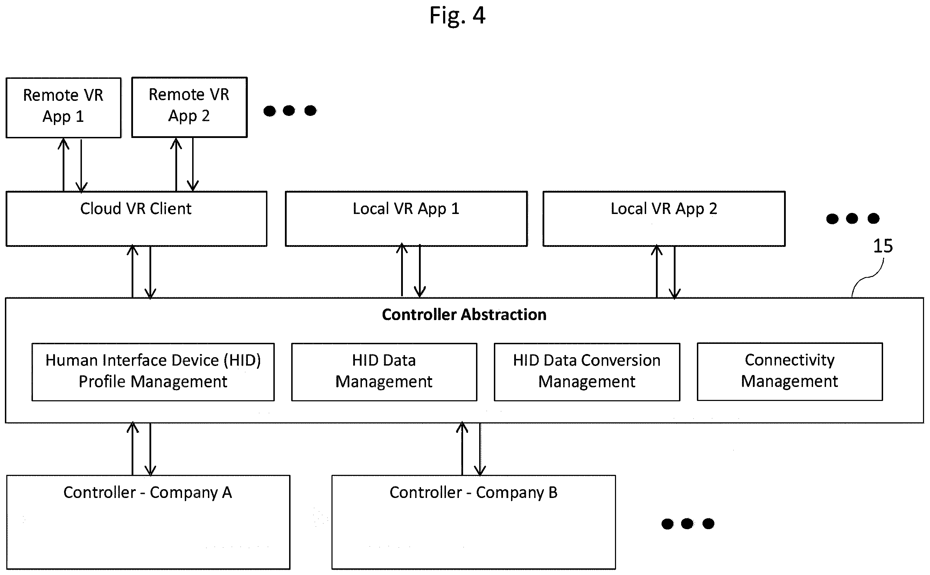

The controller abstraction module 15 interfaces between the VR/AR applications and the VR/AR SDKs to obtain and manage parameters of the VR/AR controller 31, 32. Depending on specific functions, the controller abstraction module 15 comprises sub-modules for managing human interface device (HID) profile, HID data, HID data conversion and/or connectivity with the mobile computer 1, as illustrated in Fig. 4.

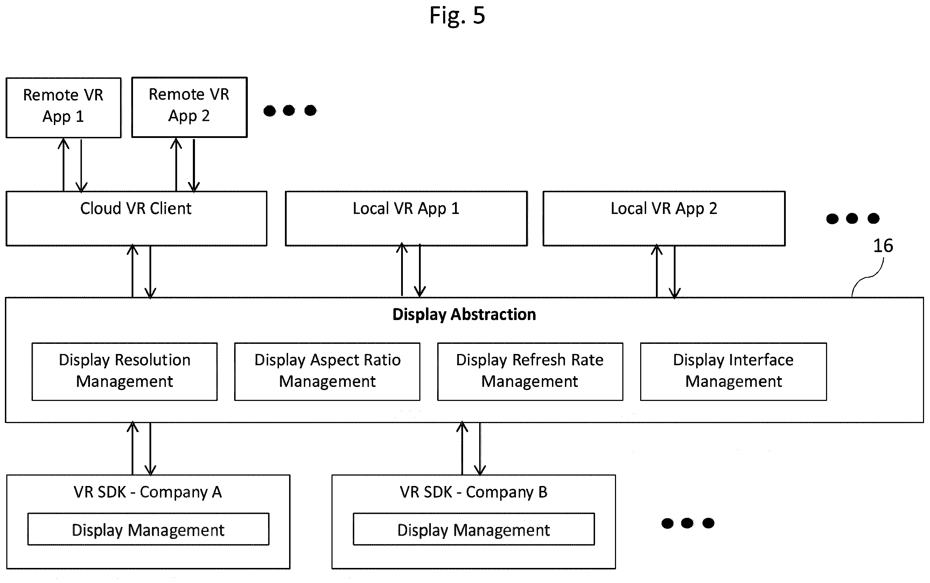

The display abstraction module 16 interfaces between the VR/AR applications and the VR/AR SDKs to obtain and manage parameters of the display 213, 223 in the HMD 21, 22. Depending on specific functions, the display abstraction module 15 comprises sub-modules for managing display resolution, display aspect ratio, display refresh rate and/or display interface, as illustrated in Fig. 5.

The VR/AR device profile manage module 13 may forward the obtained device profile or information related to the obtained device profile to a display abstraction module 16, and the display abstraction module 16 may determine the parameters of the display 213, 223 in the HMD 21, 22 based on the device profile or the information received.

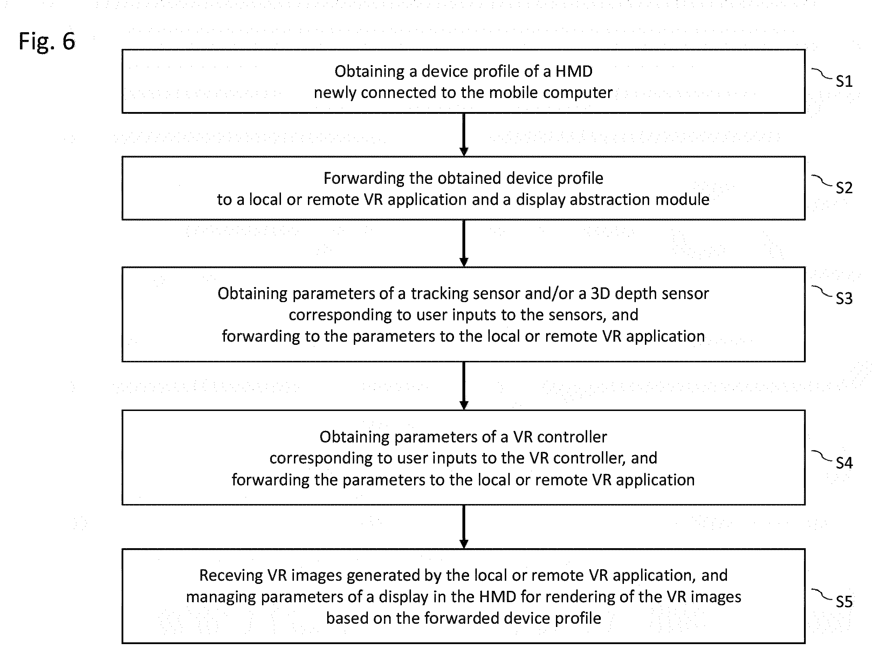

Fig. 6 illustrate a flow of operations performed by the abstraction layer when a new HMD is connected to the mobile computer 1.

When the new HMD is connected to the mobile computer 1 via a USB protocol, the mobile computer 1 identifies a device profile of the connected HMD. Based on the device profile, the mobile computer 1 determines a VR/AR SDK to interface with the new HMD

The VR/AR device profile management module 13 obtains the device profile of the new HMD from the determined VR/AR SDK, or information related to the device profile (S1 in Fig. 6). The VR/AR device profile management module 13 forwards the device profile or the related information to the local or remote VR/AR application being executed, and to the display abstraction module 16 (S2 in Fig. 6).

Then, in response to user inputs to the tracking sensor 211, 221 and/or the 3D depth sensor 212, 222 in the new HMD 21, 22, the tracking abstraction module 14 obtains parameters of the sensors, i.e. sensor readings, corresponding to the user inputs, and forwards the obtained parameters or information related to the obtained parameters to the local or remote application (S3 in Fig. 6).

In case of a VR/AR controller 31, 32 being used, in response to user inputs to the VR/AR controller 31, 32, the controller abstraction module 15 obtains parameters of the VR/AR controller corresponding to the user inputs to the VR/AR controller 31, 32, and forwards the obtained parameters or information related to the obtained parameters to the local or remote VR/AR application being executed (S4 in Fig. 6).

In case of a VR/AR accessory 5 being used, in response to user inputs to the VR/AR accessory 5, the controller abstraction module 15 obtains parameters of the VR/AR accessory 5 corresponding to the user inputs to the VR/AR accessory 5, and forwards the obtained parameters or information related to the obtained parameters to the local or remote VR/AR application being executed. The VR/AR accessory 5 may interface directly with the controller abstraction module 15 or indirectly via a VR/AR SDK dedicated for the VR/AR accessory 5.

The local or remote VR/AR application generates VR/AR images based on information received from the VR/AR device profile management module 13 and at least one of the tracking abstraction module 14 and the controller abstraction module 15.

The display abstraction module 16 receives the generated VR/AR images and manages parameters of a display in the HMD 21, 22 based on the device profile or the related information received from the VR/AR device profile management module 13, for displaying the generated VR/AR images on the display in the HMD 21, 22 (S5 in Fig. 6).

Alternatively, in the operation step S2, the device profile or the related information may be forwarded from the VR/AR device profile management module 13 directly to the display abstraction module 16 but via the local or remote VR/AR application.

Alternatively, in the operation step S2, the device profile or the related information may not be forwarded to the display abstraction module 16. Instead, in the operation step S5, the generated VR/AR images received by the display abstraction module 16 may be produced by taking into account the information related to the device profile.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A mobile computer (1) connectable with a plurality of head mount display, HMD, which have different device form factors, comprising:
a processor; and
a memory comprising program codes stored therein, the program codes corresponding to:
a plurality of software development kits, SDKs, when executed by the processor, each configured to interface with an HMD (2) having a particular device form factor;
a local VR/AR application, when executed by the processor, configured to generate VR/AR images to be displayed on a HMD (2) for a VR/AR service; and
an abstraction layer, when executed by the processor, configured to interface between the SDKs and the local VR/AR application, and convert device-independent data or requests of functions received from the local VR/AR application into device-dependent data or requests of functions for the SDKs, and vice versa.

2. The mobile computer (1) of claim 1, wherein the mobile computer (1) is connected to a HMD (21, 22) having a display and at least one sensor, and the memory further comprises program codes stored therein, the program codes corresponding to:
a VR/AR device profile management module (13) in the abstraction layer, when executed by the processor, configured to obtain a device profile of the HMD or information related to the device profile, and forward the device profile or the information to the local VR/AR application;
a tracking abstraction module (14) in the abstraction layer, when executed by the processor, configured to obtain parameters of the at least one sensor corresponding to user inputs to the at least one sensor, and forward the obtained parameters or information related to the obtained parameters to the local VR/AR application; and
a display abstraction module (16) in the abstraction layer, when executed by the processor, configured to receive VR/AR images generated by the local VR/AR application and manage parameters of the display in the HMD (21, 22) for displaying the VR/AR images.

3. The mobile computer (1) of claim 2, wherein the memory further comprises program codes stored therein, when executed by the processor, configured:
for the local VR/AR application to generate the VR/AR images based on the device profile or the information received from the VR/AR device profile management module (13), and the parameters or the information received from the track abstraction module (14).

4. The mobile computer (1) of claim 2 or 3, wherein the memory further comprises program codes stored therein, when executed by the processor, configured:
for the VR/AR device profile management module (13) to forward the device profile or the information related to the device profile to the display abstraction module (16); and
for the display abstraction module (16) to manage the parameters of the display in the HMD (21, 22) based on the device profile or the information forwarded from the VR/AR device profile management module (13).

5. The mobile computer (1) of any one of claims 1 to 4, wherein the mobile computer (1) is connected to a VR/AR accessory (5) which comprises at least one sensor to detect user inputs of a particular type, and the memory further comprises program codes stored therein, the program codes corresponding to:
a controller abstraction module (15) in the abstraction layer, when executed by the processor, configured to obtain parameters of the VR/AR accessory (5) corresponding to the user inputs to the VR/AR accessory (5), and forward the obtained parameters or information related to the obtained parameters to the local VR/AR application.

6. The mobile computer (1) of claim 5, wherein the memory further comprises program codes stored therein, when executed by the processor, configured:
for the controller abstraction module (15) to obtain parameters of the VR/AR accessory (5) corresponding to user inputs to the VR/AR accessory (5), and forward the obtained parameters or information related to the obtained parameters to the local VR/AR application.

7. The mobile computer (1) of any one of claims 1 to 6, wherein the mobile computer (1) is connectable with a remote VR/AR server or stationary computer (4) executing a remote VR/AR application, the remote VR/AR application cooperating with the local VR/AR application for the VR/AR service, and wherein the memory further comprises program codes stored therein, when executed by the processor, configured for the abstraction layer to interface between the SDKs and the remote VR/AR application, and convert device-independent data or requests of functions received from the remote VR/AR application into device-dependent data or requests of functions for the SDKs, and vice versa.

8. A method of providing a VR/AR system comprising a mobile computer (1) as a computing device to generate VR/AR images; and a head mount display, HMD (21, 22), comprising a display and at least one sensor and being connected to the mobile computer (1), wherein the mobile computer (1) comprises a processor; and a memory comprising program codes stored therein,
providing a plurality of software development kits, SDK in the mobile computer (1), each SDK configured to interface with an HMD (21, 22) having a particular device form factor;
identifying one of the SDKs dedicated to the connected HMD;
providing a local VR/AR application in the mobile computer (1) configured to generate VR/AR images for display on the connected HMD (21, 22); and
providing an abstraction layer in the mobile computer, the abstraction layer configured to interface between the identified SDK and the local VR/AR application, and convert device-independent data or requests of functions received from the local VR/AR application into device-dependent data or requests of functions for the identified SDK, and vice versa.

9. The method of claim 8, further comprising:
providing a VR/AR device profile management module (13) in the abstraction layer configured to obtain a device profile of the HMD (21, 22) or information related to the device profile, and forward the device profile or the information to the local VR/AR application;
providing a tracking abstraction module (14) in the abstraction layer configured to obtain parameters of the at least one sensor in the HMD (21, 22) corresponding to user inputs to the at least one sensor, and forward the obtained parameters or information related to the obtained parameters to the local VR/AR application; and
providing a display abstraction module (16) in the abstraction layer configured to receive VR/AR images generated by the local VR/AR application and manage parameters of the display in the HMD (21, 22) for displaying the VR/AR images.

10. The method of claim 9, wherein the local VR/AR application is further configured to generate the VR/AR images based on the device profile or the information received from the VR/AR device profile management module (13), and the parameters or the information received from the track abstraction module (14).

11. The method of claim 9 or 10, wherein the VR/AR device profile management module (13) is further configured to forward the device profile or the information related to the device profile to the display abstraction module (16); and the display abstraction module (16) is further configured to manage the parameters of the display in the HMD (21, 22) based on the device profile or the information forwarded from the VR/AR device profile management module (13).

12. The method of any one of claims 8 to 11, wherein the mobile computer (1) is connected to a VR/AR accessory (5) which comprises at least one sensor to detect user inputs of a particular type, the method further comprising:
providing a controller abstraction module (15) in the abstraction layer configured to obtain parameters of the VR/AR accessory (5) corresponding to the user inputs to the VR/AR accessory (5), and forward the obtained parameters or information related to the obtained parameters to the local VR/AR application.

13. The method of claim 12, wherein the controller abstraction module (15) is configured to obtain parameters of the VR/AR accessory (5) corresponding to user inputs to the VR/AR accessory (5), and forward the obtained parameters or information related to the obtained parameters to the local VR/AR application.

14. The method of any one of claims 8 to 13, wherein the VR/AR system comprises a remote VR/AR server or stationary computer (4) executing a remote VR/AR application, the remote VR/AR application cooperating with the local VR/AR application for the VR/AR service, and the abstraction layer is further configured to interface between the SDKs and the remote VR/AR application, and convert device-independent data or requests of functions received from the remote VR/AR application into device-dependent data or requests of functions for the SDKs, and vice versa.

15. A VR/AR system for providing a VR/AR service, comprising:
the mobile computer (1) of any one of claims 1 to 7 to generate VR/AR images for the VR/AR service; and
a head mount display, HMD (21, 22) connected to the mobile computer (1), having a display and at least one sensor, and configured to interface with a software development kit, SDK, dedicated to the HMD (21, 22), to display the VR/AR images on the display and receive user inputs to the at least one sensor,
wherein the VR/AR system, preferably, further comprises a VR/AR controller (31, 32) configured to interface with said SDK to receive user inputs to one or more sensors in the VR/AR controller (31, 32).

## Amended claims

### Amended claims in accordance with Rule 137(2) EPC.

1. A mobile computer (1) connectable with a plurality of head mount display, HMD, which have different device form factors, comprising:
a processor; and
a memory comprising program codes stored therein, the program codes corresponding to:
a plurality of software development kits, SDKs, when executed by the processor, each configured to interface with an HMD (2) having a particular device form factor;
a local VR/AR application, when executed by the processor, configured to generate VR/AR images to be displayed on a HMD (2) for a VR/AR service; and
an abstraction layer, when executed by the processor, configured to interface between the SDKs and the local VR/AR application, and convert device-independent data or requests of functions received from the local VR/AR application into device-dependent data or requests of functions for the SDKs, and vice versa,
**characterized in that** the mobile computer (1) is connected to a HMD (21, 22) having a display and at least one sensor, and the memory further comprises program codes stored therein, the program codes corresponding to:
a VR/AR device profile management module (13) in the abstraction layer, when executed by the processor, configured to obtain a device profile of the HMD or information related to the device profile, and forward the device profile or the information to the local VR/AR application;
a tracking abstraction module (14) in the abstraction layer, when executed by the processor, configured to obtain parameters of the at least one sensor corresponding to user inputs to the at least one sensor, and forward the obtained parameters or information related to the obtained parameters to the local VR/AR application; and
a display abstraction module (16) in the abstraction layer, when executed by the processor, configured to receive VR/AR images generated by the local VR/AR application and manage parameters of the display in the HMD (21, 22) for displaying the VR/AR images,
wherein the memory further comprises program codes stored therein, when executed by the processor, configured:
for the VR/AR device profile management module (13) to forward the device profile or the information related to the device profile to the display abstraction module (16); and
for the display abstraction module (16) to manage the parameters of the display in the HMD (21, 22) based on the device profile or the information forwarded from the VR/AR device profile management module (13).

2. The mobile computer (1) of claim 1, wherein the memory further comprises program codes stored therein, when executed by the processor, configured:
for the local VR/AR application to generate the VR/AR images based on the device profile or the information received from the VR/AR device profile management module (13), and the parameters or the information received from the track abstraction module (14).

3. The mobile computer (1) of claim 1 or 2, wherein the mobile computer (1) is connected to a VR/AR accessory (5) which comprises at least one sensor to detect user inputs of a particular type, and the memory further comprises program codes stored therein, the program codes corresponding to:
a controller abstraction module (15) in the abstraction layer, when executed by the processor, configured to obtain parameters of the VR/AR accessory (5) corresponding to the user inputs to the VR/AR accessory (5), and forward the obtained parameters or information related to the obtained parameters to the local VR/AR application.

4. The mobile computer (1) of claim 3, wherein the memory further comprises program codes stored therein, when executed by the processor, configured:
for the controller abstraction module (15) to obtain parameters of the VR/AR accessory (5) corresponding to user inputs to the VR/AR accessory (5), and forward the obtained parameters or information related to the obtained parameters to the local VR/AR application.

5. The mobile computer (1) of any one of claims 1 to 4, wherein the mobile computer (1) is connectable with a remote VR/AR server or stationary computer (4) executing a remote VR/AR application, the remote VR/AR application cooperating with the local VR/AR application for the VR/AR service, and wherein the memory further comprises program codes stored therein, when executed by the processor, configured for the abstraction layer to interface between the SDKs and the remote VR/AR application, and convert device-independent data or requests of functions received from the remote VR/AR application into device-dependent data or requests of functions for the SDKs, and vice versa.

6. A method of providing a VR/AR system comprising a mobile computer (1) as a computing device to generate VR/AR images; and a head mount display, HMD (21, 22), comprising a display and at least one sensor and being connected to the mobile computer (1), wherein the mobile computer (1) comprises a processor; and a memory comprising program codes stored therein,
providing a plurality of software development kits, SDK in the mobile computer (1), each SDK configured to interface with an HMD (21, 22) having a particular device form factor;
identifying one of the SDKs dedicated to the connected HMD;
providing a local VR/AR application in the mobile computer (1) configured to generate VR/AR images for display on the connected HMD (21, 22); and
providing an abstraction layer in the mobile computer, the abstraction layer configured to interface between the identified SDK and the local VR/AR application, and convert device-independent data or requests of functions received from the local VR/AR application into device-dependent data or requests of functions for the identified SDK, and vice versa,
**characterized in that** the method further comprises:
providing a VR/AR device profile management module (13) in the abstraction layer configured to obtain a device profile of the HMD (21, 22) or information related to the device profile, and forward the device profile or the information to the local VR/AR application;
providing a tracking abstraction module (14) in the abstraction layer configured to obtain parameters of the at least one sensor in the HMD (21, 22) corresponding to user inputs to the at least one sensor, and forward the obtained parameters or information related to the obtained parameters to the local VR/AR application; and
providing a display abstraction module (16) in the abstraction layer configured to receive VR/AR images generated by the local VR/AR application and manage parameters of the display in the HMD (21, 22) for displaying the VR/AR images, and
wherein the VR/AR device profile management module (13) is further configured to forward the device profile or the information related to the device profile to the display abstraction module (16); and the display abstraction module (16) is further configured to manage the parameters of the display in the HMD (21, 22) based on the device profile or the information forwarded from the VR/AR device profile management module (13)

7. The method of claim 6, wherein the local VR/AR application is further configured to generate the VR/AR images based on the device profile or the information received from the VR/AR device profile management module (13), and the parameters or the information received from the track abstraction module (14).

8. The method of claim 6 or 7, wherein the mobile computer (1) is connected to a VR/AR accessory (5) which comprises at least one sensor to detect user inputs of a particular type, the method further comprising:
providing a controller abstraction module (15) in the abstraction layer configured to obtain parameters of the VR/AR accessory (5) corresponding to the user inputs to the VR/AR accessory (5), and forward the obtained parameters or information related to the obtained parameters to the local VR/AR application.

9. The method of claim 8, wherein the controller abstraction module (15) is configured to obtain parameters of the VR/AR accessory (5) corresponding to user inputs to the VR/AR accessory (5), and forward the obtained parameters or information related to the obtained parameters to the local VR/AR application.

10. The method of any one of claims 6 to 9, wherein the VR/AR system comprises a remote VR/AR server or stationary computer (4) executing a remote VR/AR application, the remote VR/AR application cooperating with the local VR/AR application for the VR/AR service, and the abstraction layer is further configured to interface between the SDKs and the remote VR/AR application, and convert device-independent data or requests of functions received from the remote VR/AR application into device-dependent data or requests of functions for the SDKs, and vice versa.

11. A VR/AR system for providing a VR/AR service, comprising:
the mobile computer (1) of any one of claims 1 to 5 to generate VR/AR images for the VR/AR service; and
a head mount display, HMD (21, 22) connected to the mobile computer (1), having a display and at least one sensor, and configured to interface with a software development kit, SDK, dedicated to the HMD (21, 22), to display the VR/AR images on the display and receive user inputs to the at least one sensor,
wherein the VR/AR system, preferably, further comprises a VR/AR controller (31, 32) configured to interface with said SDK to receive user inputs to one or more sensors in the VR/AR controller (31, 32).
